(19)

Europäisches Patentamt
European Patent Office
Office européen des brevets

(11) **EP 2 878 185 A1**

(12) **EUROPEAN PATENT APPLICATION**

(43) Date of publication:
**03.06.2015 Bulletin 2015/23**

(21) Application number: **13195154.3**

(22) Date of filing: **29.11.2013**

(51) Int Cl.:
*A01B 1/00* (2006.01)     *A01D 34/90* (2006.01)
*A01D 46/00* (2006.01)    *B25G 1/04* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fuego Invest & Finance Corp.
Road Town, Tortola (VG)**

(72) Inventor: **Balestrieri, Rita
6944 Cureglia (CH)**

(74) Representative: **Celestino, Marco
ABM Agenzia Brevetti & Marchi,
Viale Giovanni Pisano, 31
56123 Pisa (IT)**

(54) **Improved structure for handling a tool**

(57)     A tool structure (100) comprises a rod (110) and a working head (120). The rod (110) has a first end (111) and a second end (112) located at a predetermined distance x. The working head (120) has a mass $m_1$ and is engaged at the first end (111) of the rod (110). The tool structure (100) provides furthermore a stiff elongated element (130) integral to the rod (110) at the second end (112). A balancing body (140) is moreover provided having mass $m_2$ and constrained to the stiff elongated element (130) at a predetermined position H located at a predetermined distance y from the second end (112) of the rod (120). In this way, considering a pivot point P located at the second end (112) of the rod (120), the moments $M_1$ and $M_2$ produced by, respectively, the masses $m_1$ and $m_2$ with respect to the pivot point P oppose each others.

**Fig. 2**

**(Cont. next page)**

EP 2 878 185 A1

Fig. 2A

**Description**

<u>Field of the invention</u>

The present invention relates to a structure for handling a tool, for example for household or industrial use, or for agricultural use.

In particular, the present invention relates an elongated handle, for example a rod, to operate an harvesting or a cutting tool at a desired height above the head of a user.

<u>Background of the invention</u>

Rods for handling a tool of the above mentioned type are known of many kinds. They differ from each other in the way for which they are arranged to increase or reduce their length and in the way for which they are locked/released at a desired length.

They can be used for handling a tool at a desired height above the head of a user, such as tools for harvesting fruit from trees, for cutting tree branches, for painting or brushing ceiling or side walls, for collecting objects from high shelves or closets, or for hanging objects at a desired height, etc.

For this reason, these rods can be very long and the tools can be heavy. This means that the center of gravity is far from the point at which an user grips the rod, and he must take an extra effort to win the moment produced by the weight of the tool in order to keep the rod straight. This problem causes, by the user, a loss of maneuverability and precision in the use of the tool, and moreover it causes a significant fatigue of the user, which can not continue to work for long periods of time.

<u>Summary of the invention</u>

It is therefore a feature of the present invention to provide a tool structure for handling a tool at a desired height above the head of a user that balances the moment produced by the weight of the tool respect the user's grip, in such a way that he doesn't tire too much and can continue to work for a long period.

It is, furthermore, a feature of the present invention to provide such tool structure that is easy to maneuver during the handling of the tool.

It is, furthermore, a feature of the present invention to provide such tool structure that allow a high precision in pointing the tool.

It is, furthermore, a feature of the present invention to provide such tool structure that eliminates the problem of the placement of a battery.

It is, furthermore, a feature of the present invention to provide such tool structure that allows to vary automatically the length of the rod.

It is, furthermore, a feature of the present invention to provide such tool structure that automatically balances the moment produced by the weight of the tool respect the user's grip, also when the length of the rod is varied.

These and other objects are achieved by a tool structure comprising:

- a rod having a first end and a second end;
- a working head, having mass $m_1$, engaged at the first end of the rod;

that provides furthermore a stiff elongated element integral to the rod at the second end.

Advantageously, a balancing body is provided having mass $m_2$ and constrained to the stiff elongated element at a predetermined position H, in such a way that moments $M_1$ and $M_2$ oppose each others, the moments $M_1$ and $M_2$ being produced by, respectively, the masses $m_1$ and $m_2$ with respect to a pivot point P located at a predetermined distance x from the first end of the rod and at a predetermined distance y from the predetermined position H.

In particular, the smaller the difference between the moments $M_1$ and $M_2$, the smaller is the moment $M_u$ the user has to generate with his hand, and, in consequence, the smaller is the effort the user has to make to keep the rod straight.

Advantageously, the balancing body comprises a power supply arranged to feed the working head. In this way, in addition to provide an easy handling of the rod, the tool structure allows to solve the problem of the battery placement, that is often present in the prior art's devices.

In particular, the pivot point is integral to the user by a support arranged to rest on at least one shoulder of the user in order to sustain, at least partially, the weight of the embodiment.

Advantageously, the support is substantially hook-shaped, in order to lie down on the, or each, shoulder of the user.

Furthermore, the hook-shaped support can engage behind the user's back, for example to a belt, in order not to rotate on the user's shoulder.

In particular, the support is made of flexible material, in order to be arranged to the size and to the shape of the shoulder of the user.

Advantageously, the support comprises a resilient element arranged to permit a variation of the relative position between the user and the rod. In this way, the user has more freedom to move and direct the rod. Moreover, vibrations and loads on the rod are damped by the resilient element in order not to transfer them to the user's body.

Advantageously, the rod is configured in such a way that it is possible to vary the predetermined distance x.

In particular, the variation of the predetermined distance x is automated, so that it is possible to vary the predetermined distance x during the use of the tool structure.

Advantageously, the rod has a telescopic structure comprising at least a first part, integral to the first end, and a second part, integral to the second end, in such a way to vary the predetermined distance x. In this way it is possible to vary the distance x depending on the user's needs.

Advantageously, the stiff elongated element is configured in such a way that it is possible to vary the predetermined distance y. In this way it is possible to vary the moment $M_2$ in consequence to a variation of moment $M_1$.

In particular, the variation of the predetermined distance y is automated, so that it is possible to vary the predetermined distance y during the use of the tool structure.

In particular, a control unit is provided arranged to control that the variation of the predetermined distance y is proportional to the variation of the predetermined distance x.

Advantageously, the balancing body is slidingly mounted to the stiff elongated element.

Alternatively, the balancing body, or part of it, is constrained in a removable way to the stiff elongated element.

In particular, the working head is an harvesting device for small fruits, in particular a shaking device for olives harvesting.

Brief description of the drawings

The invention will be now shown with the description of an exemplary embodiment thereof, exemplifying but not limitative, with reference to the attached drawings, wherein:

- Fig. 1 is a perspective view of a tool structure as provided in the prior art;
- Fig. 1A is a frontal view of the user, showing the loads acting on his body in case shown in fig. 1;
- Fig. 2 is a perspective view of a first embodiment of the tool structure as provided by the invention;
- Fig. 2A is a frontal view of the user, showing the loads acting on his body in case shown in fig. 2;
- Fig. 3 is a perspective view of a second embodiment of the tool structure as provided by the invention;
- Fig. 3A is a frontal view of the user, showing the loads acting on his body in case shown in fig. 3;
- Fig. 4 is a perspective view of a third embodiment of the tool structure as provided by the invention;
- Fig. 4A is a frontal view of the user, showing the loads acting on his body in case shown in fig. 4.

Description of a preferred embodiment

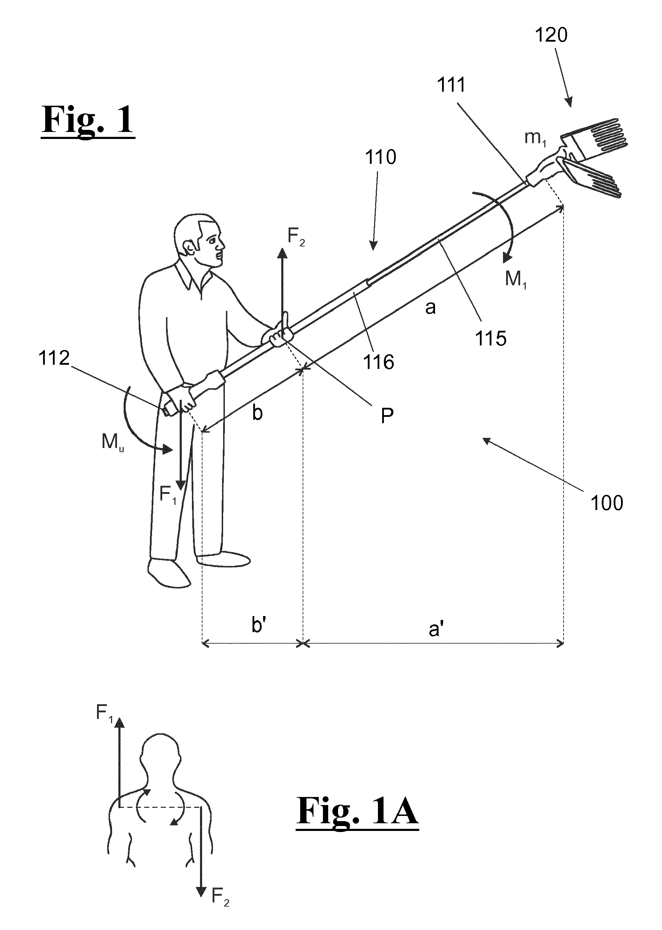

With reference to figure 1, a tool structure 100 as provided in the prior art comprises a rod 110 and a working head 120 having a mass $m_1$. The rod 110 has a first end 111, at which the working head 120 is engaged, and a second end 112. In figure 1, the working head 120 is a shaking device for olives harvesting.

Considering a pivot point P located at the left hand of the user, mass $m_1$ produces a moment $M_1$ that has to be opposed by a moment $M_u$ produced by the user applying a force $F_1$ with the right hand. Furthermore, the user has to apply a force $F_2$ with the left hand in order to balance both weight force of the mass $m_1$ and force $F_1$.

As shown in figure 1A, to apply forces $F_1$ and $F_2$ user receives two reactions equal and opposite to $F_1$ and $F_2$ on his shoulder's articulations. This produces an elevated torque with consequent contraction of the muscles, fatigue, and involvement of the spine.

In particular, considering that pivot point P is located at a distance a from said mass $m_1$ and at a distance b from the application point of $F_1$, and defining a' and b' as horizontal projections, respectively, of the distances a and b, the moments produced by masses $m_1$ and force $F_1$ are given by the following relations: $M_1 = m_1*a'$, $M_u = F_1*b'$.

Considering the pivot point P equidistant between user's hands, and considering, as numerical example, $m_1$=3kg, a'=160cm and b'=40cm, will be: $F_1$=12kg and $F_2$=15kg. Understandably, this produces great fatigue and muscular problems to a user who uses the tool structure 100 for many hours a day.

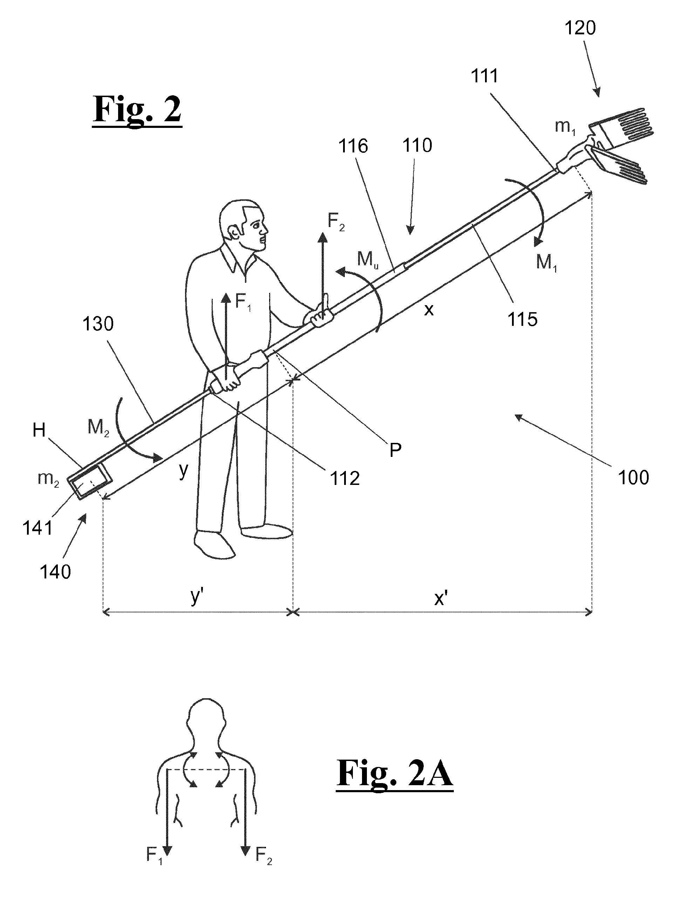

With reference to figure 2, in a preferred embodiment the tool structure 100, as provided by the invention, comprises a stiff elongated element 130, that is integral to the rod 110 at the second end 112, and a balancing body 140, having mass $m_2$ and being constrained to the stiff elongated element 130 at a predetermined position H.

In this way, considering a pivot point P located at a predetermined distance x from the first end 111 of said rod 120 and at a predetermined distance y from said predetermined position H, the moments $M_1$ and $M_2$ produced, respectively, by masses $m_1$ and $m_2$ respect to the pivot point P oppose each others, so that a user can move and direct easily the tool structure 100.

In particular, defining x' and y' as horizontal projections, respectively, of the distances x and y, the moments produced by masses $m_1$ and $m_2$ are given by the following relations: $M_1 = m_1*x'$, $M_2 = m_2*y'$.

As known, the smaller the difference between the moments $M_1$ and $M_2$, the smaller is the moment $M_u$ the user has to generate with his hand, and, in consequence, the smaller is the effort he has to make to keep the rod straight.

Considering the same numerical example of figure 1, if $m_1$=3kg, $m_2$=5,4kg, x'=180cm and y'=100cm, we have: $F_1$=4,2kg and $F_2$=4,2kg, much less than the previous case. Furthermore, with reference to figure 2A, the reactions on the user's shoulders are both in the same sense, so that they don't produce a torque.

Advantageously, the balancing body 140 can comprise a power supply 141 arranged to feed the working head 120. In this way, in addition to provide an easy handling of the rod 110, the tool structure 100 as provided by the present invention allows to solve the problem of the battery placement, that is often present in the prior art's devices.

The embodiment in figure 2 provides, furthermore, that the rod 110 has a telescopic structure comprising a first part 115, integral to the first end 111, and a second part 116, integral to the second end 112. In this way it is possible to vary the distance x depending on the user's needs.

The variation of the predetermined distance x can be also automated, for example by a motor controlled by a control unit, in order to vary the distance x during the use of the tool structure 100.

Since the distance x changes, the tool structure 100 provides that also the distance y can vary proportionally.

In particular, the balancing body 140 can be constrained in a removable way, or slidingly mounted, to the stiff elongated element 130. In this way an user can change the position H of the balancing body 140 along the stiff elongated element 130, varying the distance y and, in consequence, the moment $M_2$.

Alternatively, to automate the y variation, a control unit can be provided arranged to check the instant value of moment $M_1$, in order to command the displacement of the balancing body 140 and ensure the desired balance between the moments $M_1$ and $M_2$.

In particular, if the balancing body 140 is slidingly mounted to the stiff elongated element 130, a motor can slide the balancing body 140 along the stiff elongated element 130 until the correct position H is found.

The control unit can check the instant value of $M_1$, for example, trough position sensors placed on the rod 110 and arranged to measure the x variation, or trough inertial sensors arranged to measure the angular acceleration of the rod 110.

Alternatively, if the x variation is automated, the control unit can controls both the extension of the rod 110 and the displacement of the balancing body 140, so that the control unit doesn't need to receive data about the value of $M_1$ by external devices to know how much vary the distance y.

Also mass $m_2$ may vary to change the moment $M_2$ and balance $M_1$, but this variation is not fast and easy for obvious practical reasons. So it is preferred to set the value of the mass $m_1$ when mass $m_2$ of the working head 120 is set and then only modify the distances x and y. An example of the sizing of the mass $m_2$ is given by the following formula:

$$m_2 = m_1 * (x'_{max}/y'_{max})$$

where $x'_{max}$ and $y'_{max}$ are the maximum values of, respectively, x' and y'. In this way also when the y'= $y'_{max}$, $M_2$ can balance completely $M_1$.

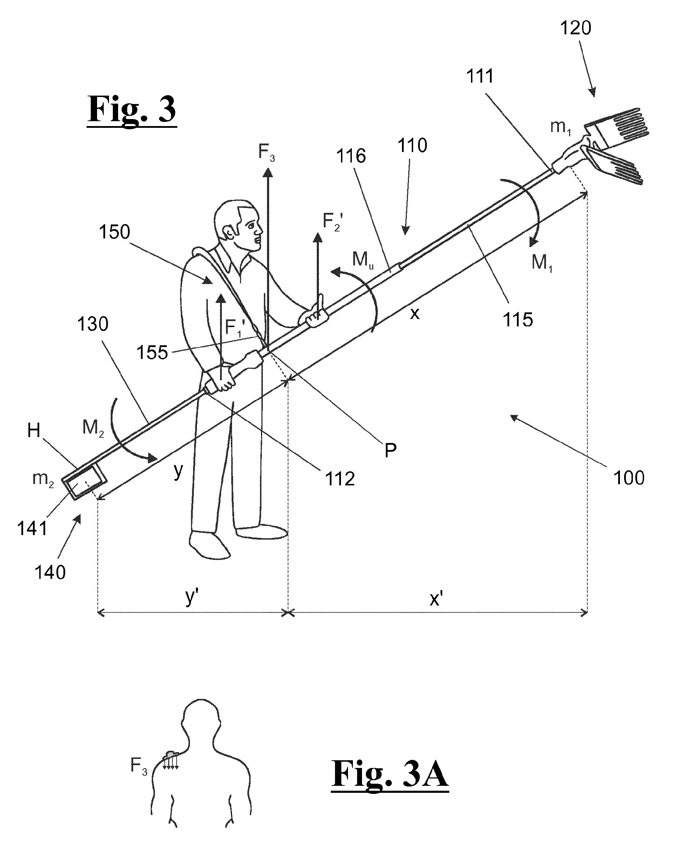

With reference to figure 3, in an alternative embodiment of the invention, the pivot point P is integral to the user by a support 150 arranged to rest on his shoulder in order to sustain, at least partially, the weight of the embodiment. In particular, the support 150 is hook-shaped in order to lie down on the right, or left, shoulder of the user and allow the user to move around with hands free. Furthermore, the hook-shaped support 150 engages behind the user's back, for example to a belt, in order not to rotate on the user's shoulder.

As shown in figure 3A, the reaction on the user's shoulders is equal and opposite to $F_3$ that is given by the sum of $F_1$ and $F_2$. The force $F_3$ is, furthermore, distributed on a large surface on the user's shoulder, so that it doesn't produce a muscular problem to the user.

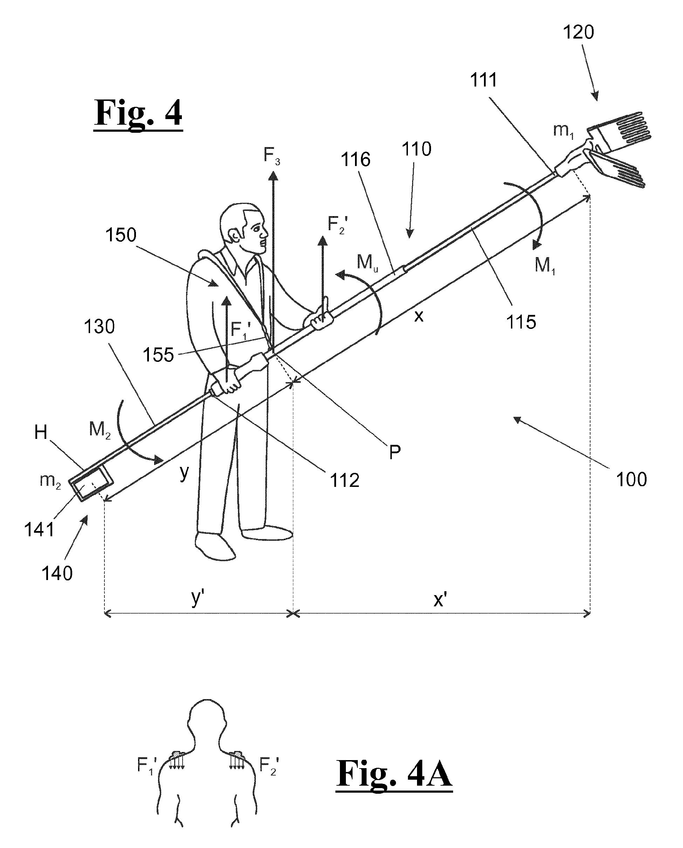

With reference to figures 4 and 4A, in an alternative embodiment of the figure 3, the support 150 is arranged to rest on both the shoulders of the user, so that the effort is even more distributed and less fatiguing for the user.

In a preferred embodiment, the support 150 comprises a resilient element 155 arranged to permit a variation of the relative position between the rod 110 and the shoulder, or other body part, of said user. In this way, the user has more freedom to move and direct the rod 110. Moreover, vibrations and loads on the rod 110 are damped by the resilient element 155 in order not to transfer them to the user's body.

The foregoing description of exemplary embodiments will so fully reveal the invention according to the conceptual point of view, so that others, by applying current knowledge, will be able to modify and/or adapt for various applications such embodiment without further research and without parting from the invention, and, then it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology the is employed herein is for the purpose of description and not of limitation.

**Claims**

1. A tool structure (100) comprising:

   - a rod (110) having a first end (111) and a second end (112);
   - a working head (120), having mass $m_1$, engaged at said first end (111) of said rod (110);

   **characterized in that** it provides a stiff elongated element (130) integral to said rod (110) at said second end (112);
   **and in that** a balancing body (140) is provided having mass $m_2$ and constrained to said stiff elongated element (130) at a predetermined position H, in such a way that moments $M_1$ and $M_2$ oppose each others, said moments $M_1$ and $M_2$ being produced by, respectively, said masses $m_1$ and $m_2$ with respect to a pivot point P located at a predetermined distance x from said first end (111) of said rod (120) and at a predetermined distance y from said predetermined position H.

2. The tool structure (100), according to claim 1, wherein said balancing body (140) comprises a power supply (141) arranged to feed said working head (120).

3. The tool structure (100), according to claim 1, wherein said pivot point P is integral to a user by a support (150) arranged to rest on at least one shoulder of said user.

4. The tool structure (100), according to claim 3, wherein said support (150) is substantially hook-shaped, in order to lie down on said or each shoulder of said user.

5. The tool structure (100), according to claim 3, wherein said support (150) is made of flexible material, in order to be arranged to the size and to the shape of the shoulder of said user.

6. The tool structure (100), according to claim 3, wherein said support (150) comprises a resilient element (155) arranged to permit a variation of the relative position between said user and said rod (110).

7. The tool structure (100), according to claim 1, wherein said rod (110) is configured in such a way that it is possible to vary said predetermined distance x.

8. The tool structure (100), according to claim 7, wherein the variation of said predetermined distance x is automated, so that it is possible to vary said predetermined distance x during the use of said tool structure (100).

9. The tool structure (100), according to claim 7, wherein said rod (110) has a telescopic structure comprising at least a first part (115), integral to said first end (111), and a second part (116), integral to said second end (112), in such a way to vary said predetermined distance x.

10. The tool structure (100), according to claim 1, wherein said stiff elongated element (130) is configured in such a way that it is possible to vary said predetermined distance y.

11. The tool structure (100), according to claim 10, wherein the variation of said predetermined distance y is automated, so that it is possible to vary said predetermined distance y during the use of said tool structure (100).

12. The tool structure (100), according to claim 8 and 11, wherein a control unit is provided arranged to control that the variation of said predetermined distance y is proportional to the variation of said predetermined distance x.

13. The tool structure (100), according to claim 7, wherein said balancing body (140) is slidingly mounted to said stiff elongated element (130).

14. The tool structure (100), according to claim 7, wherein said balancing body (140) is constrained in a removable way to said stiff elongated element (130).

15. The tool structure (100), according to any of the previous claims, wherein said working head (120) is an harvesting device for small fruits, in particular a shaking device for olives harvesting.

# Fig. 1

120

111

110

$m_1$

$M_1$

$F_2$

112

115

$a$

116

P

$M_u$

$F_1$

b

100

b'

a'

$F_1$

# Fig. 1A

$F_2$

## Fig. 2

120

111

m₁

116  110

$F_2$

$M_u$

$F_1$

$M_1$

x

115

130

P

H

$M_2$

112

y

m₂

100

141

140

y'

x'

## Fig. 2A

$F_1$  $F_2$

**Fig. 3**

**Fig. 3A**

Fig. 4

Fig. 4A

Europäisches
Patentamt

European
Patent Office

Office européen
des brevets

# EUROPEAN SEARCH REPORT

Application Number

EP 13 19 5154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 772 057 A (HARVEY HENRY R [US]) 20 September 1988 (1988-09-20) * column 2, line 66 - column 3, line 61; figures 1,2 * | 1,3 | INV. A01B1/00 A01D34/90 A01D46/00 B25G1/04 |
| X | EP 0 933 015 A1 (MESHEK ADVANCED SOLUTIONS FOR [IL]) 4 August 1999 (1999-08-04) | 1-3 | |
| Y | * paragraphs [0006], [0012], [0018], [0021] - [0025]; figures 1A,1B * | 9 | |
| X | DE 514 370 C (CARL FRIES) 11 December 1930 (1930-12-11) * the whole document * | 1,10,13,14 | |
| X | WO 98/36633 A1 (FREDRICKSON DAVID F [US]) 27 August 1998 (1998-08-27) * page 8, line 1 - page 10, line 2; figures 1,14 * | 1,7 | |
| Y | US 5 425 225 A (FRANCO DRUSIANI [IT]) 20 June 1995 (1995-06-20) * columns 3,4 * | 9 | TECHNICAL FIELDS SEARCHED (IPC) |
| A | US 2013/031705 A1 (MUCHIN JAY Z [US] ET AL) 7 February 2013 (2013-02-07) * paragraphs [0015] - [0017]; figures 1-3 * | 5,6 | A01B A01D B25G |

The present search report has been drawn up for all claims

| Place of search | Date of completion of the search | Examiner |
|---|---|---|
| Munich | 5 May 2014 | Simson, Guenter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                                   EP 13 19 5154

This annex lists the patent family members relating to the patent documents cited in  the above-mentioned European search report.
The members are as contained in the European Patent Office EDP file on
The European Patent Office is in no way liable for these particulars which are merely given for the purpose of information.

05-05-2014

| Patent document<br>cited in search report | | Publication<br>date | Patent family<br>member(s) | | Publication<br>date |
|---|---|---|---|---|---|
| US 4772057 | A | 20-09-1988 | NONE | | |
| EP 0933015 | A1 | 04-08-1999 | AU<br>AU<br>EP<br>IL | 756616 B2<br>1423499 A<br>0933015 A1<br>123113 A | 16-01-2003<br>19-08-1999<br>04-08-1999<br>04-01-2004 |
| DE 514370 | C | 11-12-1930 | NONE | | |
| WO 9836633 | A1 | 27-08-1998 | AU<br>US<br>WO | 6147198 A<br>5799996 A<br>9836633 A1 | 09-09-1998<br>01-09-1998<br>27-08-1998 |
| US 5425225 | A | 20-06-1995 | AU<br>AU<br>DE<br>EP<br>ES<br>IT<br>US | 670889 B2<br>7413194 A<br>69427459 D1<br>0666019 A1<br>2159550 T3<br>B0940016 U1<br>5425225 A | 01-08-1996<br>17-08-1995<br>19-07-2001<br>09-08-1995<br>16-10-2001<br>08-08-1995<br>20-06-1995 |
| US 2013031705 | A1 | 07-02-2013 | NONE | | |

EPO FORM P0459

For more details about this annex : see Official Journal of the European Patent Office, No. 12/82